# EUROPEAN PATENT APPLICATION

(11) **EP 2 536 032 A1**
(43) Date of publication of application: **19.12.2012**
(21) Application number: 11739587.1
(22) Date of filing: 08.02.2011
(51) Int. Cl.: H04B 1/16

(54) **AUDIO APPARATUS**

(30) Priority: 08.02.2010 JP 2010025091
(71) Applicant: Panasonic Corporation, Kadoma-shi Osaka 571-8501 (JP)
(72) Inventor: NOGUCHI, Takafumi, Osaka-shi, Osaka 540-6207 (JP)
(74) Representative: Vigand, Philippe
(86) International application number: PCT/JP2011/000695
(87) International publication number: WO 2011/096238

(57) **Abstract**

A control section 14 of an audio apparatus stores music identification information received by a radio receiver 11, into a temporary tagging table 20 in an internal memory 19 when instructed by an operation section 18. The control section stores, based on the music identification information, information which is necessary for displaying a music identification information acquisition history for every broadcasting stations, into a history management table 21. The control section stores, based on the table, information which is necessary for displaying the number of times music identification information was acquired for each of the broadcasting stations, into a broadcasting station management table 22, and, when a radio broadcast is being reproduced, displays the number of times music identification information was acquired for each of broadcasting stations that are reproducible, on a display section 17. By displaying, in such a way, the number of times and history in which music identification information was acquired for each of radio broadcasting stations, and sorting and displaying in a descending order of broadcasting stations according to the number of times music identification information was acquired, the user is enabled to easily know a broadcasting station that frequently broadcasts a preferred music.

## Description

### Technical Field

The present invention relates to an audio apparatus which includes a digital radio receiver, and in which the user can easily know a broadcasting station that frequently broadcasts a preferred music.

### Background Art

As a conventional audio apparatus, known is an audio apparatus which, in the case where the audio apparatus receives a digital audio broadcast or an FM multiplex broadcast, when the user operates an operation section, takes in music additional information that is transmitted together with audio data, and records the data in a download designation memory, and in which, in response to further instructions from the user, a download music designation section transmits data recorded therein to an audio distribution center, and the audio distribution center searches an audio database for a designated music designated by an audio database, and transmits the music toward the audio apparatus, thereby allowing the audio apparatus to record the music additional information on an audio recording medium. Furthermore, the audio distribution center may be connected to the Internet network, and a communication section may access the music additional information through the Internet (for example, see Patent Reference 1).

In the case where an audio apparatus accesses an audio distribution center through a personal computer, an external memory such as a portable audio apparatus connected to the audio apparatus, stored music additional information is transferred to the external memory, and the external memory is connected to the personal computer, thereby enabling the above-described technique to be executed.

### Prior Art Reference

### Patent Reference

Patent Reference 1: JP-A-2002-319226

### Summary of the Invention

### Problem that the Invention is to Solve

In a conventional audio apparatus, when music identification information (music additional information) is transferred to an external memory such as a portable audio apparatus, however, information in an internal memory of the audio apparatus is cleared. Therefore, there is a problem in that the number of times and history in which music identification information was acquired for every broadcasting stations are not displayed, and the user must memorize which broadcasting station frequently broadcasts a preferred music.

The invention has been conducted in order to solve the conventional problem. It is an object of the invention to provide an audio apparatus which includes a digital radio receiver, and in which the number of times and history in which music identification information was acquired can be displayed for every radio broadcasting stations, and the numbers of times and the histories can be displayed while sorted in a descending order of broadcasting stations according to the number of times the music identification information was acquired. Means for Solving the Problems

In order to achieve the object, the audio apparatus of the invention includes: a radio receiver that receives a radio broadcast with music identification information indicative of identification of a music represented by a currently broadcasted audio signal; an operation section that instructs to acquire the music identification information; a control section that counts a number of times acquisition of the music identification information was instructed by the operation section; an internal memory that stores the number of times that is counted for every broadcasting stations by the control section, as a broadcasting station management table; and a display section that displays contents of the broadcasting station management table stored in the internal memory.

### Advantageous of the Invention

According to the invention, in an audio apparatus including a digital radio receiver, therefore, the user can easily know a broadcasting station that frequently broadcasts a preferred music.

### Brief Description of the Drawings

[Fig. 1] Fig. 1 is a configuration diagram of an audio apparatus of an embodiment of the invention.
[Fig. 2] Fig. 2(a) is a view representing a temporary tagging table in the embodiment of the invention, Fig. 2(b) is a view representing a history management table in the embodiment of the invention, and Fig. 2(c) is a view representing a broadcasting station management table in the embodiment of the invention.
[Fig. 3] Fig. 3 is a flowchart representing a process of preparing the temporary tagging table in the embodiment of the invention.
[Fig. 4] Fig. 4 is a flowchart representing a process of preparing the history management table in the embodiment of the invention.
[Fig. 5] Fig. 5 is a flowchart representing a process of preparing the broadcasting station management table in the embodiment of the invention.
[Fig. 6] Fig. 6(a) is a view illustrating a display section disposed in the audio apparatus of the embodiment of the invention, and Fig. 6(b) is a view illustrating the display section disposed in the audio apparatus of the embodiment of the invention, in the case of sorting in a descending order of broadcasting stations according to the number of times tag information was acquired.
[Fig. 7] Fig. 7 is a flowchart representing a display process of the display section disposed in the audio apparatus of the embodiment of the invention.

### Mode for Carrying Out the Invention

Hereinafter, an embodiment of the invention will be described with reference to the drawings.

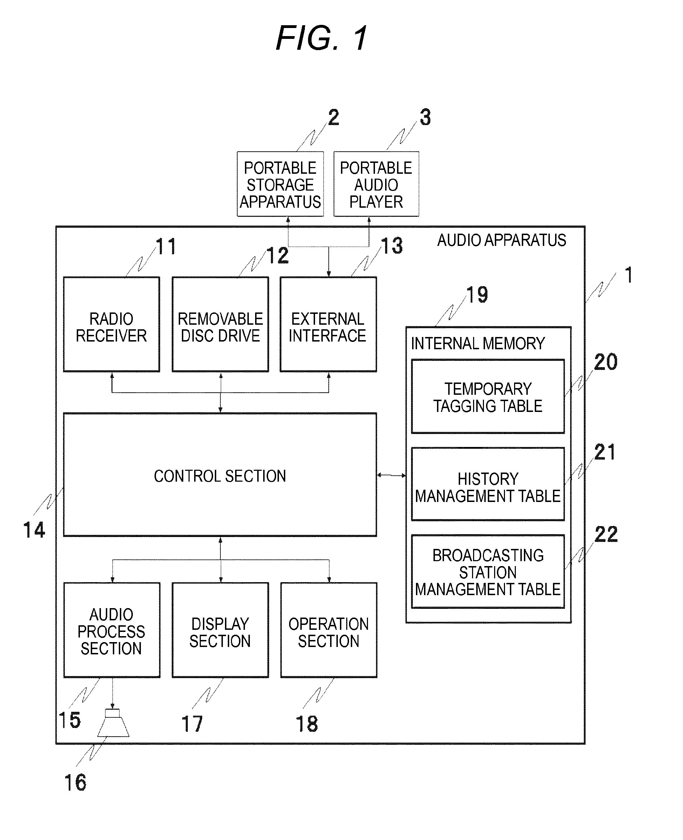

Fig. 1 represents the configuration of an audio apparatus 1 of the embodiment. The audio apparatus 1 includes a radio receiver 11, a removable disc drive 12 which reproduces a CD or a DVD disc, an external interface 13, a control section 14, an audio process section 15, a speaker 16, a display section 17, an operation section 18, and an internal memory 19.

In the internal memory 19, a temporary tagging table 20, a history management table 21, and a broadcasting station management table 22 are provided.

External apparatuses such as a portable storage apparatus 2 such as a memory card or a USB memory device, and a portable audio player 3 can be selectively connected to the external interface 13.

The portable audio player 3 is a portable apparatus which records an audio file of a music into an incorporated HDD or a semiconductor memory, and which performs a process of reproducing the recorded audio file.

When singly used, in the process of reproducing an audio file, the portable audio player 3 reproduces and outputs sounds represented by audio data stored in the audio file to sound output terminals disposed in the portable audio player 3, and, when connected to the audio apparatus 1, in the process of reproducing an audio file, the portable audio player outputs the audio data in the audio file to the audio apparatus 1.

The radio receiver 11 receives a digital radio broadcast with tag information for tagging that is music identification information. The tag information is information for specifying a music which is currently broadcasted by the digital radio broadcast.

In the embodiment, as tag information of each music, information such as the album name and title of the music, the artist, the music ID, and the name of the broadcasting station is used. The audio process section 15 performs a process of outputting sounds represented by input audio data to the speaker 16.

According to the configuration, in the case where the radio receiver 11 is set as an audio source by a user's operation of the operation section 18, the control section 14 sets a reception channel of the radio receiver 11 among reproducible broadcasting stations in accordance with the user's operation of the operation section 18.

In the radio receiver 11, by contrast, a broadcast signal of the radio broadcast of the set reception channel is received by a front end, a demodulation/separation section which is not shown demodulates/separates the broadcast signal received by the front end, into audio data and tag information, the audio data are output to the audio process section 15, and the tag information is output to the control section 14 in accordance with an access from the control section 14.

Moreover, the control section 14 causes the audio process section 15 to output sounds represented by audio data output from the radio receiver 11, from the speaker 16.

In the case where reproduction of an audio file recorded on the portable storage apparatus 2 connected to the external interface 13 or a CD or DVD loaded in the removable disc drive 12 is instructed by a user's operation of the operation section 18, then, the control section 14 reads audio data of the audio file which is instructed to be reproduced, outputs the data to the audio process section 15, and causes the audio process section 15 to output sounds represented by the provided audio data from the speaker 16.

In the case where reproduction of the portable audio player 3 connected to the external interface 13 is instructed by a user's operation of the operation section 18, the control section 14 causes the audio process section 15 to output sounds represented by audio data which are input from the portable audio player 3 in the audio apparatus 1, from the speaker 16.

In the internal memory 19 of the audio apparatus 1, stored are: the temporary tagging table 20 in which, in the tag information of the music that is received through the digital radio broadcast by the radio receiver 11, tag information of the currently broadcasted music is stored only when a tag information acquisition instruction is issued by a user's operation of the operation section 18; a history management table 21 for managing the history in which tag information was acquired for each of broadcasting stations; and a broadcasting station management table 22 for displaying the number of times and history in which tag information was acquired for each broadcasting station.

In the portable storage apparatus 2 and the portable audio player 3, a tagging table is stored into which, when the portable storage apparatus 2 or the portable audio player 3 is connected to the audio apparatus 1, the tag information stored in the temporary tagging table is transferred and stored by the control section 14.

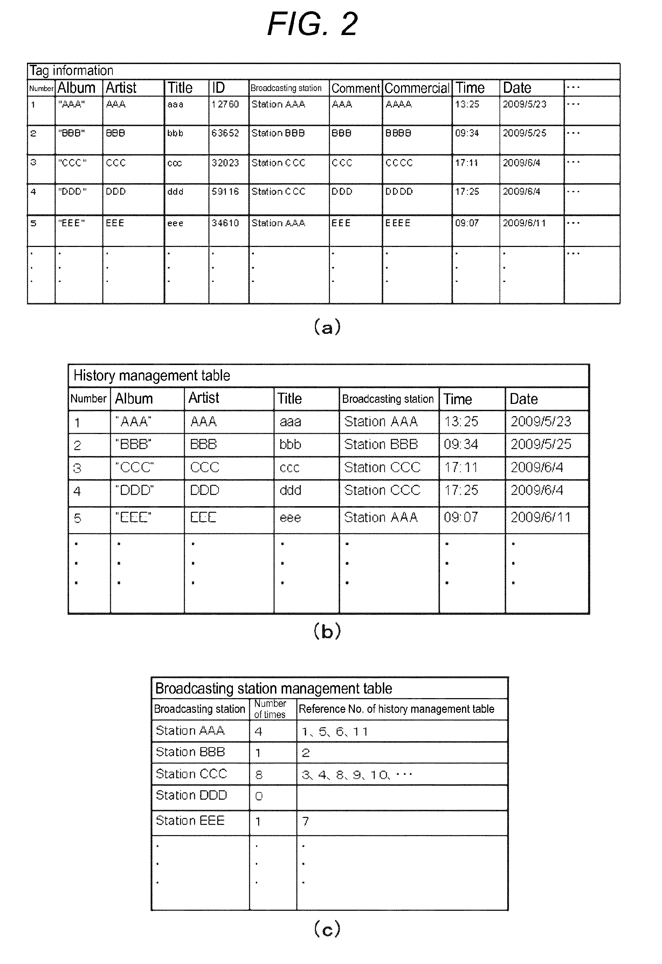

Here, Fig. 2(a) represents the temporary tagging table 20 which is stored in the internal memory 19 of the audio apparatus 1.

As represented in Fig. 2(a), the temporary tagging table 20 is a table which, in the case where a tag acquisition instruction is issued by a user's operation of the operation section 18, stores the tag information of the currently broadcasted music.

When the portable storage apparatus 2 or the portable audio player 3 is connected, the tag information stored in the temporary tagging table 20 is transferred, and the temporary tagging table 20 is cleared.

Next, Fig. 2(b) represents the history management table 21 which is stored in the internal memory 19 of the audio apparatus 1. As represented in Fig. 2(b), the history management table 21 copies only information which is necessary for a history display, from the temporary tagging table 20 which has not been cleared, and the information is stored in the history management table 21. The history management table 21 always keeps holding information regardless of connection of the portable storage apparatus 2 or the portable audio player 3.

Furthermore, Fig. 2(c) represents the broadcasting station management table 22 which is stored in the internal memory 19 of the audio apparatus 1. As represented in Fig. 2(c), the broadcasting station management table 22 is a data table for storing a list of broadcasting stations, the number of times the tag information was acquired for each broadcasting station, and reference numbers in the history management table 21. The broadcasting station management table 22 always keeps holding information regardless of connection of the portable storage apparatus 2 or the portable audio player 3.

Here, the reference numbers indicate management numbers which are added to respective tag information by using different arbitrary numbers.

Hereinafter, the process operation of the thus configured audio apparatus 1 will be described.

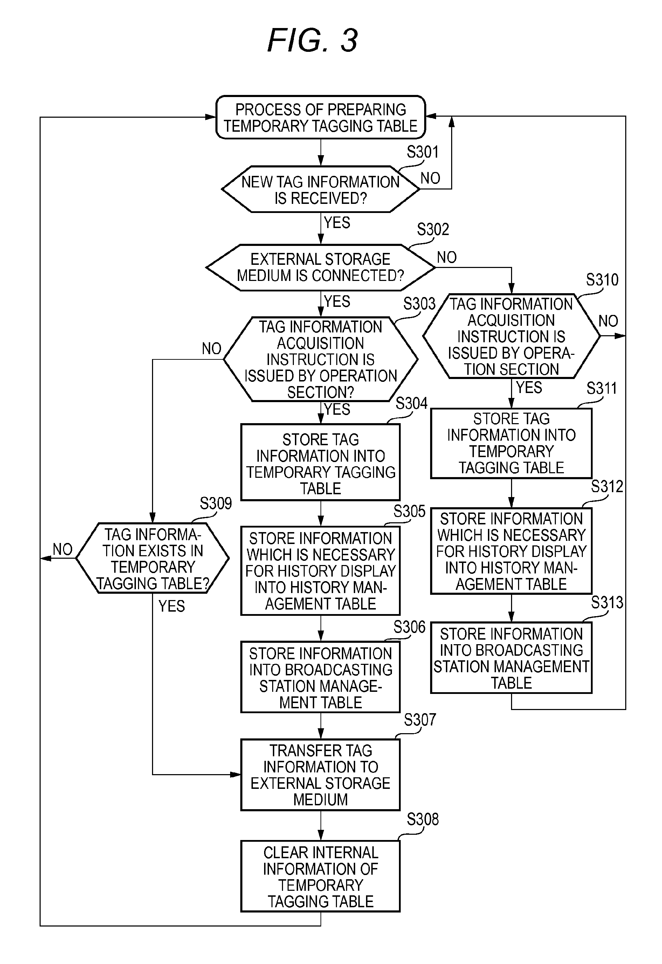

Fig. 3 is a flowchart representing a process of preparing the temporary tagging table 20 in the embodiment of the invention.

Referring to Fig. 3, when the audio apparatus 1 first receives tag information (step S301), it is checked whether the portable storage apparatus 2 or the portable audio player 3 is connected or not (step S302). If the connection is confirmed, it is checked whether the tag information acquisition instruction is issued by the operation section 18 or not (step S303).

If the tag information acquisition instruction is issued (YES in step S303), the received tag information is stored into the temporary tagging table 20 (step S304), only information (the album name, the music title, the artist name, the broadcasting station name, and the acquisition time and date) which is necessary for a history display is stored from the stored table into the history management table 21 (step S305), and update of the number of times the tag information was acquired for each broadcasting station, and that of the reference number on the history management table 21 are performed on the broadcasting station management table 22 (step S306).

Thereafter, the tag information stored in the temporary tagging table 20 is transferred to the connected portable storage apparatus 2 or portable audio player 3 (step S307), the internal data of the temporary tagging table 20 are cleared (step S308), and the process is returned to the process of waiting reception of the next tag (step S301).

If it is checked in step S303 that the tag information acquisition instruction is not issued (NO in step S303), it is checked whether the tag information is stored in the temporary tagging table 20 or not (step S309). If exists, the process proceeds to step S307, and, if does not exist, the process returns to step S301.

If it is not confirmed in step S302 that the portable storage apparatus 2 or the portable audio player 3 is connected, the process proceeds to step S31 0 to check whether the tag information acquisition instruction is issued by the operation section 18 or not. If the instruction is issued (YES in step S31 0), the received tag information is stored into the temporary tagging table 20 (step S311), only the information (the album name, the music title, the artist name, the broadcasting station name, and the acquisition time and date) which is necessary for the history display is stored from the stored table into the history management table 21 (step S312), and update of the number of times the tag information was acquired for each broadcasting station, and that of the reference number of a history table are performed in the broadcasting station management table 22 (step S313).

If it is checked in step S310 that the tag information acquisition instruction is not issued (NO in step S31 0), the process returns to step S301.

The temporary tagging table can be prepared by the above-described process flow.

Next, a process of preparing the history management table in the embodiment of the invention will be described.

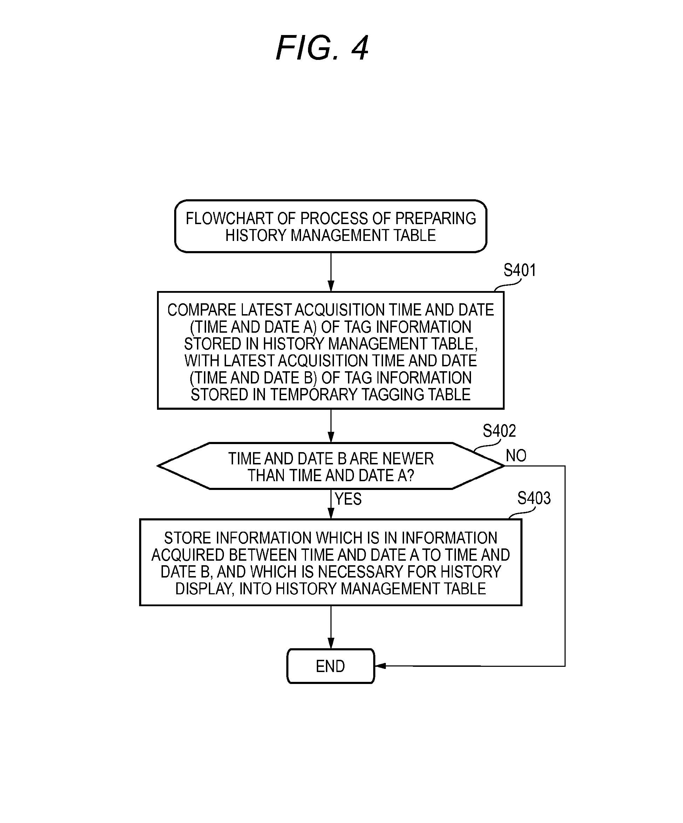

Fig. 4 is a flowchart representing the process of preparing the history management table 21 in the embodiment of the invention. The process corresponds to the processes in step S305 and step S312 in Fig. 3.

First, in the case where history display tag information exists in the history management table 21, the latest acquisition time and date (time and date A) is selected from the information, and compared with the latest acquisition time and date (time and date B) of the tag information which exists in the temporary tagging table 20 (step S401). It is determined whether the time and date B are newer than the time and date A or not (step S402).

If it is determined in step S402 that the time and date B are newer than the time and date A (YES in step S402), only information (the album name, the music title, the artist name, the broadcasting station name, and the acquisition time and date) which is necessary for the history display is stored from the new tag information into the history management table 21 (step S403).

If the time and date B are identical with the time and date A (NO in step S402), the process is ended without performing a further process.

As a result of the above-described process flow, the history management table 21 can be prepared.

Next, a process of preparing the broadcasting station management table 22 in the embodiment of the invention will be described.

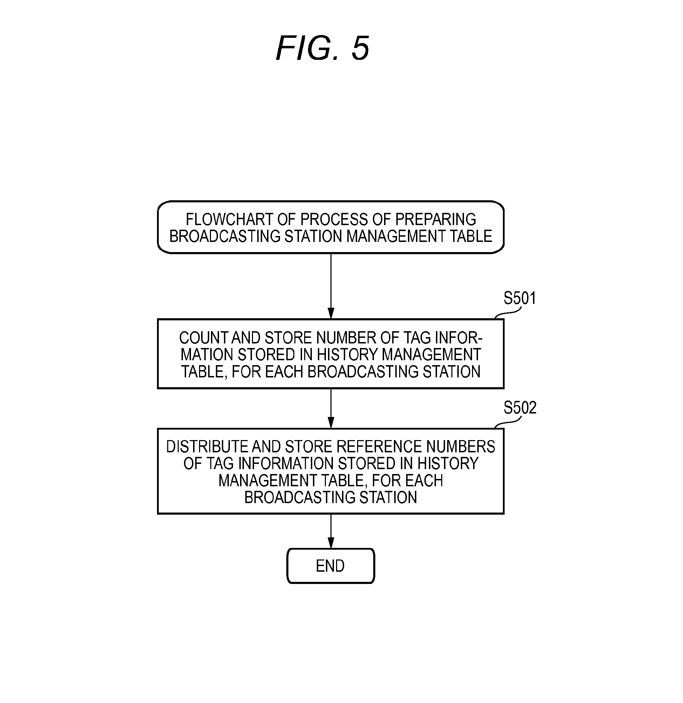

Fig. 5 is a flowchart representing the process of preparing the broadcasting station management table 22 in the embodiment of the invention. The process corresponds to the processes in step S306 and step S313.

The control section 14 counts the number of tag information for each broadcasting station in the tag information stored in the history management table 21, and stores the counted value in a place of the broadcasting station management table 22 corresponding to the broadcasting station (step S501).

Next, the number of the history management table 21 in which broadcasting stations are stored is stored in a place of the broadcasting station management table 22 corresponding to the broadcasting station (step S502). As a result of the above, the preparation of the broadcasting station management table 22 is enabled.

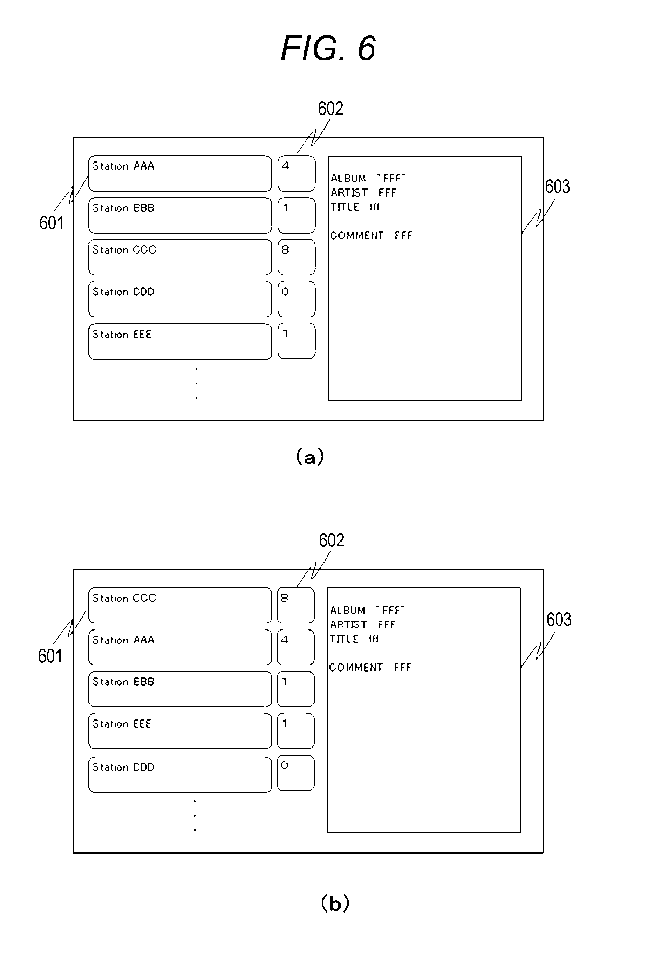

Next, the contents displayed on the display section 17 disposed in the audio apparatus 1 will be described. Fig. 6(a) is a view illustrating the display section 17 disposed in the audio apparatus of the embodiment of the invention, and represents an example of the display section 17 during reproduction of the radio broadcast.

The display section 17 displays broadcasting stations which are received by the front end, and which are broadcastable, in a broadcasting station list display portion 601.

In a tag information acquisition number display portion 602, the number of times the tag information was acquired for each of the broadcasting stations which are displayed in the broadcasting station list display portion 601, and which are broadcastable is displayed.

In the case where sorting of broadcasting stations is instructed by the operation section 18, the broadcasting stations which are displayed in the broadcasting station list display portion 601 are displayed in a descending order of the number of times the tag information was acquired, starting in the upper side of the broadcasting station list display portion 601 as indicated in a display example represented in Fig. 6(b).

The information of the currently reproduced music is displayed in a tag information display portion 603. In the case where the history display is instructed by the operation section 18, a tag information acquisition history of the currently reproduced broadcasting station is displayed in the tag information display portion 603.

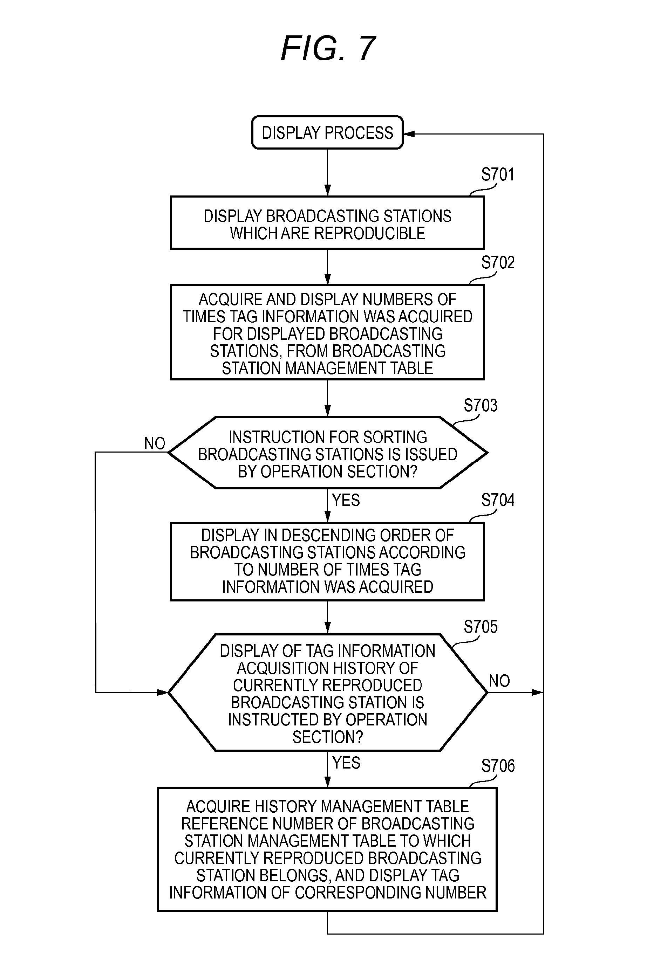

Fig. 7 is a flowchart representing a display process of the display section 17 disposed in the audio apparatus 1 of the embodiment of the invention.

First, broadcasting stations, which are received by the front end and are broadcastable, are displayed in the broadcasting station list display portion 601 (step S701).

Next, the numbers of times the tag information was acquired for the broadcasting stations which are displayed in the broadcasting station list display portion 601 are acquired from the broadcasting station management table 22 disposed in the internal memory 19, and displayed for the respective broadcasting stations in the tag information acquisition number display portion 602 (step S702).

Then, it is checked whether the sorting instruction from the operation section 18 exists or not (step S703). If the instruction exists, the broadcasting stations which are displayed in the broadcasting station list display portion 601 are displayed in a descending order of the number of times the tag information was acquired, starting in the upper side (step S704).

Thereafter, it is checked whether the history display instruction from the operation section 18 exists or not (step S705). If the instruction exists, the number to the history management table 21 of the currently reproduced broadcasting station is referred in the broadcasting station management table 22, and the history of the corresponding number in the history management table 21 is displayed in the tag information display portion 603 (step S706).

According to the embodiment, the display of the number of times and history in which the tag information was acquired for each of broadcasting stations that are broadcastable, and the display while sorted in a descending order of broadcasting stations according to the number of times the tag information was acquired are enabled.

In the above description, the external memory may include a portable storage apparatus, audio reproduction apparatus, or removable medium which is accessible from the audio apparatus.

In the above description, the example has been used in which, as the number of times the tag information was acquired for each of the broadcasting stations that is to be displayed in the tag information acquisition number display portion, the numerical value itself is displayed. Another configuration may be employed in which the number of times the tag information was acquired is expressed by, in place of a numerical value, displaying a figure such as a graph, or using the color density or cool and warm colors.

In the case where the external memory includes a portable storage apparatus, audio reproduction apparatus, or removable medium which is accessible from the audio apparatus, music identification information storing means may store the music identification information into the portable storage apparatus, the audio reproduction apparatus, or the removable medium.

The audio apparatus may include, in place of a household audio apparatus, a portable audio apparatus or an on-vehicle audio apparatus.

According to the embodiment, as described above, the internal memory of the audio apparatus including the digital radio receiver includes the table which stores the history and number of times tag information was acquired for each of broadcasting stations without clearing them, thereby enabling the display of the number of times and history in which tag information was acquired for each of broadcasting stations that are broadcastable, and the display while sorted in a descending order of broadcasting stations according to the number of times the tag information was acquired. Therefore, the user can easily know a broadcasting station that frequently broadcasts a preferred music.

Although the invention has been described in detail and with reference to the specific embodiment, it is obvious to those skilled in the art that various changes and modifications can be made without departing from the spirit and scope of the invention.

The application is based on Japanese Patent Application (No. 2010-025091) filed February 8, 2010, and its disclosure is incorporated herein by reference.

### Industrial Applicability

The audio apparatus including a digital radio receiver according to the invention is useful as not only a household audio apparatus but also as an on-vehicle audio apparatus or a portable audio apparatus.

### Description of Reference Numerals and Signs

- 1: audio apparatus
- 2: portable storage apparatus
- 3: portable audio player
- 11: radio receiver
- 12: removable disc drive
- 13: external interface
- 14: control section
- 15: audio process section
- 16: speaker
- 17: display section
- 18: operation section
- 19: internal memory
- 20: temporary tagging table
- 21: history management table
- 22: broadcasting station management table

## Claims

1. An audio apparatus comprising:
a radio receiver that receives a radio broadcast with music identification information indicative of identification of a music represented by a currently broadcasted audio signal;
an operation section that instructs to acquire the music identification information;
a control section that counts a number of times acquisition of the music identification information was instructed by the operation section;
an internal memory that stores the number of times that is counted for every broadcasting stations by the control section, as a broadcasting station management table; and
a display section that displays contents of the broadcasting station management table stored in the internal memory.

2. The audio apparatus according to claim 1, wherein the contents of the broadcasting station management table displayed by the display section include a list of broadcasting stations, and numbers of times acquisition of the music identification information was instructed in a past to the broadcasting stations.

3. The audio apparatus according to claim 1, wherein the control section controls the display section to display the broadcasting stations which are currently reproducible, in a descending order of the number of times acquisition of the music identification information was instructed in a past.

4. The audio apparatus according to claim 1, wherein the audio apparatus is connected to at least one of external apparatuses including a portable storage apparatus, an audio reproduction apparatus, and a removable medium; and
wherein the control section controls the external apparatus to store the music identification information therein.

5. The audio apparatus according to claim 4, wherein the internal memory includes:
a temporary tagging table in which the music identification information is stored; and
a history management table which stores part of information stored in the temporary tagging table; and
wherein the control section, only in a case where acquisition of the music identification information is instructed by the operation section, stores the music identification information which is currently broadcasted, into the temporary tagging table, stores information, to be displayed on the display section, among the music identification information stored in the temporary tagging table into the history management table, performs update of the number of times acquisition of the music identification information is instructed for every the broadcasting stations in the broadcasting station management table and update of information in the history management table, transfers the music identification information stored in the temporary tagging table to the external apparatus to clear the music identification information stored in the temporary tagging table.
